# EUROPÄISCHE PATENTSCHRIFT

(11) **EP 0 703 240 B1**
(45) Veröffentlichungstag und Bekanntmachung des Hinweises auf die Patenterteilung: **01.03.2000**
(21) Anmeldenummer: 95114108.4
(22) Anmeldetag: 08.09.1995
(51) Int. Cl.: C07F 9/6568

(54) **Bis-phosphepine und Verfahren zu deren Herstellung**
Bis-phosphepines and process for their preparation
Bis-phosphépines et procédé de leur préparation

(30) Priorität: 23.09.1994 DE 4433952
(43) Veröffentlichungstag der Anmeldung: 27.03.1996
(73) Patentinhaber: Celanese Chemicals Europe GmbH, 60439 Frankfurt am Main (DE)
(72) Erfinder: Regnat, Dieter, Dr., D-65817 Eppstein (DE)

(56) Entgegenhaltungen:
- US-A- 5 332 846
- CHEMICAL ABSTRACTS, vol. 78, no. 17, 1973, Columbus, Ohio, US; abstract no. 111450b, & TETRAHEDRON LETT., Bd.49, 1972 Seiten 4977 - 4978 C.N. ROBINSON ET AL
- M. BAKER, P. PRINGLE: "Chiral Aryl Diphosphites: a new Class of Ligands for Hydrocyanation Catalysis", J. CHEM. SOC., CHEM. COMMUN., , , Band 18, Nr. 1991, Seiten 1292 - 1293

## Beschreibung

Die vorliegende Erfindung betrifft Bis-phosphepine, zweizähnige Phosphanliganden, und Verfahren zu deren Herstellung.

Verbindungen, die zwei Phosphinogruppen im Molekül enthalten (zweizähnige Phosphinliganden), spielen in einer Reihe von Verfahren, in denen ein Übergangsmetallkomplex als Katalysator Anwendung findet, eine wichtige Rolle. Siehe auch A. Miyashita et al. in Tetrahedron Lett. 34, (1993), 2351 und in J. Am. Chem. Soc. 102, (1980), 7932; R. Noyori et al., Tetrahedron 40, (1984), 1245; H. Takaya, Tetrahedron Lett. 34, (1993) 1615. Als Beispiele für derartige Verfahren seien Hydrierungs-, Hydroformylierungs- und Carbonylierungsreaktionen oder die Alkylierung und die Arylierung von Aromaten genannt.

Im Hinblick auf die Vielfalt der Einsatzmöglichkeiten von zweizähnigen Phosphinliganden besteht ein Bedarf an neuen Phosphinliganden um einerseits das Spektrum ihrer Anwendungsmöglichkeiten zu ergänzen und zu erweitern und andererseits bestimmte Reaktionen besonders günstig durchführen zu können.

Diese Aufgabe wird gelöst durch Bis-phosphepine der allgemeinen Formel (I) 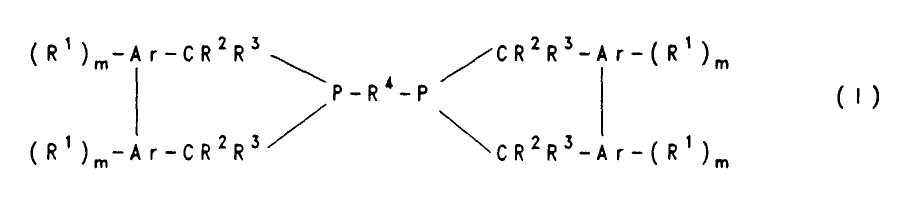 worin bedeuten:
- Ar-Ar: Biphenyl, 1,1'-Binaphthyl, 1-Phenylnaphthyl
- R¹: unabhängig voneinander F, (C₁-C₈)-Alkyl, (C₁-C₈)-Alkoxy,
- m: 0, 1, 2, 3, 4
- R², R³: unabhängig voneinander H, (C₁-C₂₀)-Alkyl, (C₆-C₂₀)-Aryl, (C₇-C₂₀)-Aralkyl, (C₇-C₂₀)-Alkaryl, (C₃-C₂₀)-Cycloalkyl,
- R⁴: (C₁-C₁₀)-Alkylen, wobei die Alkylen-Kette auch Sauerstoffatome und N-Alkylgruppen enthalten kann, (C₃-C₁₀)-Cycloalkylen, (C₈-C₂₂)-Arylenbisalkyl, (C₆-C₁₀)-Arylen,
hierbei ist die CR²R³-Gruppe jeweils benachbart zur Ar-Ar-Bindung.

Im einzelnen seien für R⁴ der Methylenrest, der Ethylenrest, n-Propylenrest, der n-Butylenrest, der 2,2'-Bis-methylen-1,1'-biphenyl- und der 2,2'-Bis-methylen-1,1'-binaphthylrest, die verschiedenen Phenylen-, Xylylen-, Biphenylen-, Binaphthylen- und Naphthylenreste genannt.

Die Phosphorverbindungen der Formel (I) können sowohl in der (R,R)-, (R,S)- oder (S,S)- als auch in der (RS)-Form vorliegen.

Von besonderem Interesse sind Verbindungen der Formel (I), worin m gleich Null ist und R² und R³ H bedeuten.

Im einzelnen seien folgende Verbindungen genannt:
4,5,4',5'-Tetrahydro-3H,3'H-4,4'-butan-1,4-diyl-bis-dinaphtho-[2,1-c:1'2'-e]-phosphepin
4,5,4',5'-Tetrahydro-3H,3'H-4,4'-methan-diyl-bis-dinaphtho-[2,1-c:1'2'-e]-phosphepin
4,5,4',5'-Tetrahydro-3H,3'H-4,4'-ethan-1,2-diyl-bis-dinaphtho-[2,1-c:1'2'-e]-phosphepin
4,5,4',5'-Tetrahydro-3H,3'H-4,4'-propan-1,3-diyl-bis-dinaphtho-[2,1-c:1'2'-e]-phosphepin
4,5,4',5'-Tetrahydro-3H,3'H-4,4'-biphen-2,2'-diyl-bis-dinaphtho-[2,1-c:1'2'-e]-phosphepin
4,5,4',5'-Tetrahydro-3H,3'H-4,4'-binaphth-2,2'-diyl-bis-dinaphtho-[2,1-c:1'2'-e]-phosphepin
4,5,4',5'-Tetrahydro-3H,3'H-4,4'-phenylen-1,2-bis-dinaphtho-[2,1-c:1'2'-e]-phosphepin
4,5,4',5'-Tetrahydro-3H,3'H-4,4'-xylylen-1,4-bis-dinaphtho-[2,1-c:1'2'-e]-phosphepin
4,5,4',5'-Tetrahydro-3H,3'H-4,4'-(1,1'-binaphthyl-2,2'-methan-diyl)-bis-dinaphtho-[2,1-c:1'2'-e]-phosphepin
6,7,6',7'-Tetrahydro-5H,5'H-6,6'-butan-1,4-diyl-bis-dibenzo-[c,e]-phosphepin
6,7,6',7'-Tetrahydro-5H,5'H-6,6'-methan-diyl-bis-dibenzo-[c,e]-phosphepin
6,7,6',7'-Tetrahydro-5H,5'H-6,6'-ethan-1,2-diyl-bis-dibenzo-[c,e]-phosphepin
6,7,6',7'-Tetrahydro-5H,5'H-6,6'-propan-1,3-diyl-bis-dibenzo-[c,e]-phosphepin
6,7,6',7'-Tetrahydro-5H,5'H-6,6'-biphen-2,2'-diyl-bis-dibenzo-[c,e]-phosphepin
6,7,6',7'-Tetrahydro-5H,5'H-6,6'-binaphth-2,2'-diyl-bis-dibenzo-[c,e]-phosphepin
6,7,6',7'-Tetrahydro-5H,5'H-6,6'-phenylen-1,2-diyl-bis-dibenzo-[c,e]-phosphepin
6,7,6',7'-Tetrahydro-5H,5'H-6,6'-xylylen-1,4-diyl-bis-dibenzo-[c,e]-phosphepin
6,7,6',7'-Tetrahydro-5H,5'H-6,6'-(1,1'-binaphthyl-2,2'-methan-diyl)-bis-dibenzo-[c,e]-phosphepin

Weiterhin betrifft die vorliegende Erfindung zwei Verfahren zur Herstellung der Verbindungen der Formel I.

Bei beiden Verfahren wird zuerst eine Verbindung der allgemeinen Formel (II), die in der (RS)-, (R)- oder (S)-Form vorliegen kann, wobei Ar, R¹, R², R³ und m die oben erwähnte Bedeutung besitzen, mit einem protonenentziehenden Mittel zu einem Biaryldianion der Formel (III) umgesetzt. In Verfahren A wird dann die Verbindung der Formel (III) mit einer Verbindung der Formel (IV) worin X für Chlor oder Brom steht und R⁴ die oben angeführte Bedeutung besitzt, zu (I) umgesetzt.

In Verfahren B wird das Dianion (III) mit einer Phosphorverbindung der Formel (V), worin X für Chlor oder Brom und Z für NR⁵₂ oder OAr' steht, wobei R⁵ (C₂-C₁₆)-Alkyl und Ar' einen (C₇-C₂₀)-Alkylarylrest oder einen gegebenenfalls mit einer oder mehreren (C₁-C₅)-Alkylgruppen substituierten Phenylrest bedeutet, zu Verbindung (VI) umgesetzt. Weiterreaktion von Verbindung (VI) mit Verbindung (VII), worin Y eine Abgangsgruppe bedeutet, liefert (VIII), woraus durch Reduktion (I) erhalten wird.
Als Abgangsgruppe Y haben sich z.B. Halogen, OSO₂R⁶, -N^{⊕}R⁷₃ bewährt, wobei R⁶ für Tolyl, CF₃, CH₃, F und R⁷ für (C₁-C₅)-Alkyl oder Phenyl stehen.

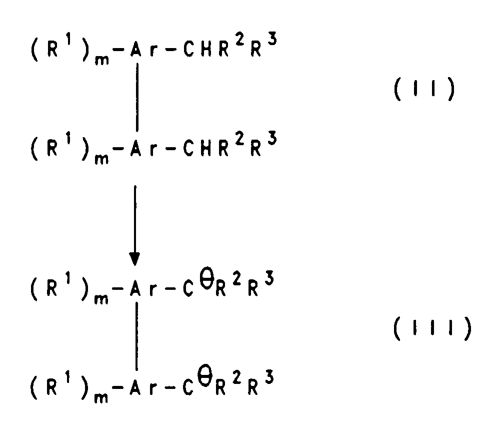

### Verfahren A:

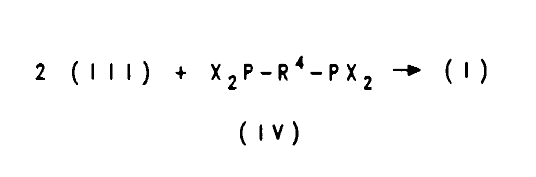

### Verfahren B:

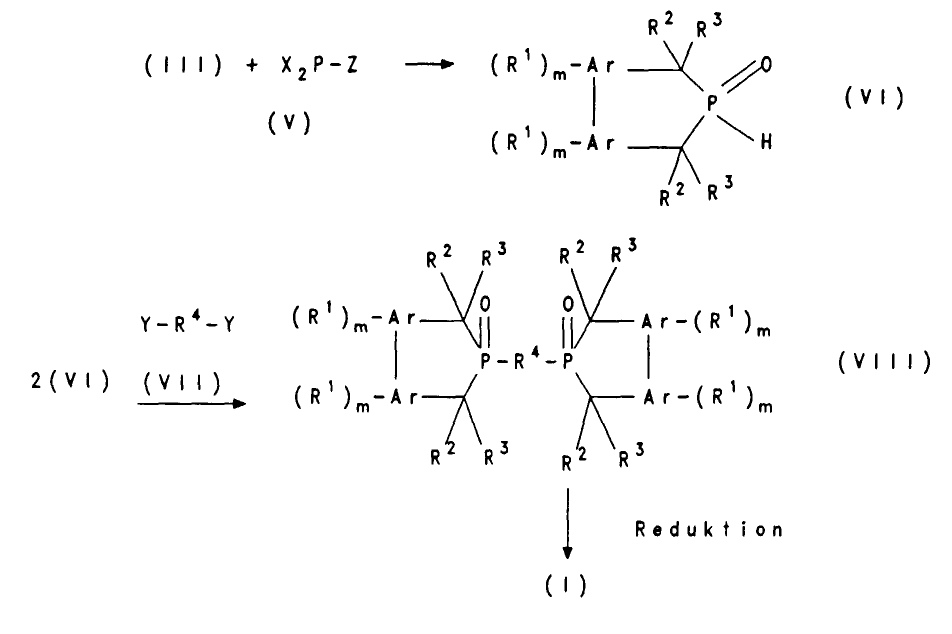

Die Herstellung des Dianions (III) erfolgt durch Umsetzen der Biaryl-Verbindung (II) in der (RS)-, (R)- oder (S)-Form mit mindestens der stöchiometrischen Menge eines protonenentziehenden Mittels in einem polar aprotischen oder unpolaren Lösungsmittel. Dianion (III) wird gegebenenfalls mit einem Lösungsmittel versetzt, vorgelegt und mit der Verbindung (IV) (Verfahren A) bzw. (V) (Verfahren B) umgesetzt. Es ist allerdings auch möglich, die Verbindung (IV) bzw. (V), gegebenenfalls mit einem Lösungsmittel versetzt, vorzulegen und zu dieser Lösung oder Suspension die gegebenenfalls mit einem Lösungsmittel versetzte, deprotonierte Verbindung zuzusetzen.

Als polar aprotisches Lösungsmittel kommen beispielsweise Tetrahydrofuran, Diethylether oder Dioxan in Betracht. Geeignete unpolare Lösungsmittel sind aliphatische Kohlenwasserstoffe.

Als protonenentziehendes Mittel setzt man starke Basen wie R'-M, wobei R' für H, C₁ bis C₁₀-Alkyl, Amid (NR''₂ mit R'' = H, C₁ bis C₁₀-Alkyl) und M für Li, Na, K oder Cs steht, ein. Es seien beispielsweise Natriumhydrid, Kaliumhydrid, n-Butyllithium, Methyllithium, t-Butyllithium, Natriumamid, Lithiumtetramethylpiperitid, Lithiumdiisopropylamid und Lithiumhexamethyldisilazid genannt. Gut geeignet sind n-Butyllithium, t-Butyllithium und Methyllithium.

In einer Reihe von Fällen hat es sich als nützlich erwiesen, die Verbindung (II) und das protonenentziehende Mittel im Verhältnis 1:(2 bis 3), insbesondere 1:(2 bis 2.2) bei -20 bis 100°C, insbesondere bei 25 bis 80°C, gegebenenfalls in Gegenwart eines Kationen-Komplexierungsmittels, wie z.B. N,N,N',N'-Tetramethylethylendiamin, N,N,N',N'-Tetraethylethylendiamin, 1,5-Diazabicyclo[4.3.0]non-5-en, Diazabicyclo[2.2.2]octan oder Kronenethern wie z.B. 18-Krone-6 usw. umzusetzen. In manchen Fällen ist es günstig, das gebildete Dianion als Komplex durch Filtration zu isolieren und diesen anschließend gegebenenfalls mit einem Löse- oder Suspensionsmittel versetzt mit der Verbindung (IV) bzw. (V) umzusetzen.

Die deprotonierte Verbindung (III) und die Verbindung (V) werden im Verhältnis 1:(0,9 bis 2), insbesondere 1:(1 bis 1,2) bei -20 bis 100°C umgesetzt und anschließend mit wäßriger Säure aufgearbeitet. Setzt man dabei eine Verbindung (V) mit Z = NR⁵₂ ein, kann das sekundäre Phosphanoxid (VI) durch Kristallisation aus der organischen Phase ausgesondert werden, setzt man eine Verbindung (V) mit X = OAr' ein, kann es vorteilhaft sein, die durch Hydrolyse gebildete Verbindung Ar'OH destillativ abzutrennen und anschließend das sekundäre Phosphanoxid (VI) durch Kristallisation zu isolieren.

Das sekundäre Phosphanoxid (VI) wird anschließend mit einer Base R'-M, wobei R' und M die oben definierte Bedeutung besitzen, umgesetzt und die deprotonierte Verbindung anschließend mit einer Verbindung der allgemeinen Formel (VII) im Verhältnis (1,8 bis 4):1, insbesondere (2 bis 2,4):1 bei 0 bis 100°C umgesetzt.

Die gebildeten Phosphanoxide (VIII) werden entweder in hoher Reinheit erhalten und können ohne weitere Reinigung bei der folgenden Reduktion eingesetzt werden oder werden durch Kristallisation gereinigt.

Anschließend wird das Phosphanoxid der Formel (VIII), gegebenenfalls in Anwesenheit eines inerten Lösungsmittels, mittels eines Hydrids oder mittels eines Organylsilans, Organyldichlorsilans oder Trichlorsilan zum Phosphan der Formel (I) reduziert. Geeignet als inertes Lösungsmittel sind beispielsweise Toluol, o-, m-, p-Xylol, Gemische isomerer Xylole, Dioxan oder Acetonitril oder Gemische dieser Lösungsmittel.
Als Hydrid kommen beispielsweise Lithiumaluminiumhydrid und als Organyldichlorsilan kommen z.B. Methyldichlorsilan, Ethyldichlorsilan oder Phenyldichlorsilan in Betracht.

Man reduziert das Phosphanoxid der Formel (VIII) üblicherweise bei 20 bis 170°C, insbesondere 40 bis 160°C, bevorzugt 60 bis 150°C.

Während Verfahren A in nur zwei Reaktionsschritten die erfindungsgemäßen Bis-phosphepine liefert, beinhaltet Verfahren B mehrere Stufen. Ein Vorteil des Verfahrens B ist jedoch, daß ausgehend von dem zentralen Zwischenprodukt (VI) durch Umsetzung mit Verbindung (VII), die in großer Strukturvielfalt verfügbar ist, eine breite Variation von R⁴ möglich ist. Dagegen sind die Zwischenprodukte (IV) nicht derartig vielfältig verfügbar. Vielmehr müssen diese zum Teil aufwendig und mit schlechten Ausbeuten synthetisiert werden (siehe Zh. Obsch. Khim. 1977, 47, 775; J. Organomet. Chem. 1979, 182, 203; Phosphorus and Sulfur 1983, 15, 155 und Houben-Weyl, Organische Phosphorchemie Band E1, 1982, S. 276 f.).

Gegenstand der Erfindung sind auch Verbindungen der Formeln (VI) und (VIII), worin R¹, R², R³, R⁴, Ar und m die oben definierte Bedeutung besitzen.

Die folgenden Beispiele sollen die Erfindung erläutern ohne sie darauf zu beschränken.

### Beispiel 1

### Herstellung von 4,5,4',5'-Tetrahydro-3H,3'H-4,4'-butan-1,4-diyl-bis-dinaphtho-[2,1-c:1'2'-e]-phosphepin (Verfahren B)

a) 4,5-Dihydro-3H-dinaphtho-[2,1-c:1',2'-e]-phosphepin-4-oxid
Unter Luft und Feuchtigkeitsausschluß werden 30,5 g (202 mmol) Tetramethylethylendiamin und 125 ml (200 mmol) einer 1,6 M-Lösung von n-Butyllithium in Hexan vorgelegt und 27,8 g (99 mmol) 2,2'-Dimethyl-1,1'-binaphthyl portionsweise zugegeben. Man rührt 2 h bei 65°C kühlt auf 20°C ab, filtriert den Feststoff mittels Umkehrfritte ab und wäscht mit Heptan. Nach Trocknen im HV erhält man 25,5 g (49 mmol) Dianion als tiefrote Kristalle. Unter Argon werden diese portionsweise zu einer Lösung von 15,1 g (49 mmol) Phosphorigsäure-2,4-di-tert.-butylphenylester-dichlorid in 50 ml Heptan gegeben, wobei sich das Reaktionsgemisch auf 60°C erwärmt. Man rührt 1 h bei 25 bis 60°C und läßt 16 Stunden bei 25°C stehen. Man tropft 50 ml Wasser und 50 ml 1 M Schwefelsäure zu, trennt die Phasen, trocknet die organische Phase mit Magnesiumsulfat, engt ein und erhält 28,6 g gelbes Öl. Das gebildete 2,4-Di-tert.-butylphenol wird im HV abdestilliert und der Rückstand aus Toluol/Heptan = 5/1 kristallisiert. Man erhält 5,6 g blaßgelbe Kristalle mit Schmp. 242 bis 246°C. ³¹P-NMR: δ (CDCl₃) = 44.2 ppm
b) 4,5,4',5'-Tetrahydro-3H,3'H-4,4'-butan-1,4-diyl-bis-dinaphtho-[2,1-c:1',2'-e]-phosphepin-4,4'-dioxid
Zu einer Lösung von 8,19 g (25 mmol) 4,5-Dihydro-3H-dinaphtho-[2,1-c:1'2'-e]-phosphepin-4-oxid (Beispiel 1a) in 50 ml trockenem THF werden 17,2 ml (27,5 mmol) einer 1,6 M-Lösung von n-Butyllithium in Hexan bei 0°C getropft. Anschließend wird die Lösung 1 h bei 0°C und 3 h bei 25°C gerührt. Danach werden 2,69 g (12,5 mmol) 1,4-Dibrombutan zugetropft und 6 h bei 25°C gerührt. Das Lösungsmittel wird im Vakuum abdestilliert und der Rückstand mit Dichlormethan/Wasser extrahiert. Die organische Phase wird abgetrennt, mit Natriumsulfat getrocknet und eingeengt. Man erhält 8,17 g (92 %) farblose Kristalle. Säulenchromatographie mit Kieselgel und Ethylacetat als Elutionsmittel ergab 5,29 g (60 %) farblose Kristalle.
³¹P-NMR (CDCl₃): δ = 65,33 ppm

| C₄₈H₄₀O₂P₂ (710.726) | | | | |
|---|---|---|---|---|
| Ber. | C 81,1 | H 5,7 | P 8,7 | O 4,5 |
| Gef. | C 81,0 | H 5,7 | P 8,6 | |

c) 4,5,4',5'-Tetrahydro-3H,3'H-4,4'-butan-1,4-diyl-bis-dinaphtho-[2,1-c:1',2'-e]-phosphepin
3,55 g (5 mmol) 4,5,4',5'-Tetrahydro-3H,3'H-4,4'-butan-1,4-diyl-bis-dinaphtho-[2,1-c:1',2'-e]-phosphepin-4,4-dioxid, 5,16 ml (22 mmol) Tributylamin und 2,29 g (20 mmol) Methyldichlorsilan werden in 120 ml o-Xylol 15 h zum Rückfluß erhitzt. Man destilliert o-Xylol bei Normaldruck ab und läßt auf RT abkühlen. Dabei bilden sich farblose Kristalle, die unter Argon abgesaugt und mit Aceton gewaschen werden. Man erhält 2,88 g (85 %) farblose Kristalle. ³¹P-NMR (CDCl₃): δ = 6,57 ppm

### Beispiel 2

### Herstellung von 4,5,4',5'-Tetrahydro-3H,3'H-4,4'-butan-1,4-diyl-bis-dinaphtho-[2,1-c:1'2'-e]-phosphepin (Verfahren A)

Zu einer Lösung von 5,2 g (0,02 mol) 1,4-Bis-(dichlorphosphino)-butan (Phosphorus and Sulfur 1983, 15, 155) in 30 ml trockenem Heptan werden bei 0°C portionsweise 20,8 g (0,04 mol) des wie in Beispiel 1a) hergestellten Dianions von 2,2'-Dimethyl-1,1'-binaphthyl als Bis-tetramethylethylendiamin-Komplex zugegeben. Anschließend erwärmt man auf 30°C und rührt 10 Stunden. Man digeriert mit 50 ml Wasser, filtriert den gebildeten Niederschlag ab und wäscht mit entgastem Heptan. Man trocknet im Vakuum, kristallisiert aus entgastem Toluol und erhält 4,7 g (35 %) farblose Kristalle ³¹P-NMR (CDCl₃): δ = 6.57 ppm.

### Beispiel 3

### Herstellung von 4,5,4',5'-Tetrahydro-3H,3'H-methan-diyl-bis-dinaphtho-[2,1-e: 1',2'-e]-phosphepin (Verfahren B)

a) siehe Beispiel 1a)
b) 4,5,4',5'-Tetrahydro-3H,3'H-methan-diyl-bis dinaphtho[2,1-c: 1',2'-e]-phosphepin-4,4'-dioxid
   Zu einer Lösung von 8,19 g (25 mmol 4,5-Dihydro-3H-dinaphtho-[2,1-c: 1',2'-e]phosphepin-4-oxid (Beispiel 1a) in 50 ml trockenem THF werden 17,2 ml (27,5 mmol) einer 1,6 M-Lösung von n-Butyllithium in Hexan bei 0°C getropft. Anschließend wird die Lösung 1 h bei 0°C und 3 h bei 25°C gerührt. Danach werden 1,06 g (12,5 mmol) Dichlormethan bei 0°C zugetropft und die Mischung 6 h bei 25°C gerührt. Das Lösungsmittel wird im Vakuum abdestilliert und der Rückstand mit Dichlormethan/Wasser extrahiert. Die organische Phase wird abgetrennt, mit Natriumsulfat getrocknet und eingeengt. Man erhält 7,6 g (91 %) farbloses Öl.
   Säulenchromatographie an Kieselgel und Ethylacetat ergab 4,6 g (55 %) farblose Kristalle.
   ³¹P-NMR (CDCl₃): δ = 60,38 und 60,23 ppm
   MS (EI): M¹ = 668
c) 4,5,4',5'-Tetrahydro-3H,3'H-methan-diyl-bis dinaphtho[2,1-c: 1',2'-e]-phosphepin
   3,34 g (5 mmol) 4,5,4',5'-Tetrahydro-3H,3'H-methan-diyl-bis dinaphtho-[2,1-c: 1',2'-e]-phosphepin-4,4'-dioxid, 5,16 ml (22 mmol) Tributylamin und 2,29 g (20 mmol) Methyldichlorsilan werden in 120 ml o-Xylol 15 h zum Rückfluß erhitzt. Man destilliert o-Xylol bei Normaldruck ab und läßt auf 20°C abkühlen. Man gibt 5 ml entgastes Aceton zu, wobei sich farblose Kristalle bilden, die abgesaugt werden und mit Aceton gewaschen werden. Man erhält 1,85 g (58 %) farblose Kristalle.
   ³¹P-NMR (CDCl₃): δ = -0,7 und -1,0 ppm

## Patentansprüche

1. Bis-Phosphepine der allgemeinen Formel (I) 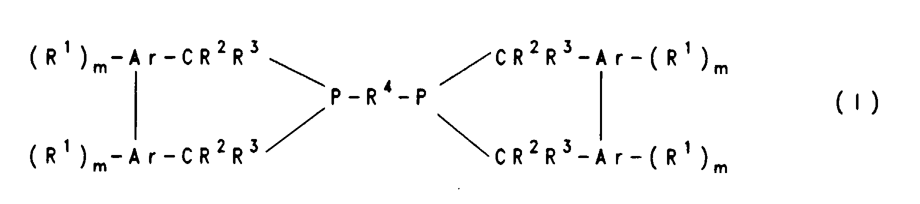 worin bedeuten:
Ar-Ar Biphenyl, 1,1'-Binaphthyl, 1-Phenylnaphthyl
R¹ unabhängig voneinander F, (C₁-C₈)-Alkyl, (C₁-C₈)-Alkoxy,
m 0, 1, 2, 3, 4
R², R³ unabhängig voneinander H, (C₁-C₂₀)-Alkyl, (C₆-C₂₀)-Aryl, (C₇-C₂₀)-Aralkyl, (C₇-C₂₀)-Alkaryl, (C₃-C₂₀)-Cycloalkyl,
R⁴ (C₁-C₁₀)-Alkylen, wobei die Alkylen-Kette auch Sauerstoffatome und N-Alkylgruppen enthalten kann, (C₃-C₁₀)-Cycloalkylen, (C₈-C₂₂)-Arylenbisalkyl, (C₆-C₁₀)-Arylen,
hierbei ist die CR²R³-Gruppe jeweils benachbart zur Ar-Ar-Bindung.

2. Verbindungen nach Anspruch 1, dadurch gekennzeichnet, daß sie (R,S), (R,R)-, (S,S)- oder (RS)-Stereochemie besitzen.

3. Verbindungen nach Anspruch 1 oder 2, dadurch gekennzeichnet, daß R⁴ für Methylen, Ethylen, n-Propylen, n-Butylen, Phenylen, Xylylen, Biphenylen oder Naphthylen steht.

4. Verbindungen nach mindestens einem der Ansprüche 1 bis 3, worin m gleich Null und R² und R³ gleich Wasserstoff sind.

5. 4,5,4',5'-Tetrahydro-3H,3'H-4,4'-butan-1,4-diyl-bis-dinaphtho-[2,1-c:1'2'-e]-phosphepin
4,5,4',5'-Tetrahydro-3H,3'H-4,4'-methan-diyl-bis-dinaphtho-[2,1-c:1'2'-e]-phosphepin
4,5,4',5'-Tetrahydro-3H,3'H-4,4'-ethan-1,2-diyl-bis-dinaphtho-[2,1-c:1'2'-e]-phosphepin
4,5,4',5'-Tetrahydro-3H,3'H-4,4'-propan-1,3-diyl-bis-dinaphtho-[2,1-c:1'2'-e]-phosphepin
4,5,4',5'-Tetrahydro-3H,3'H-4,4'-biphen-2,2'-diyl-bis-dinaphtho-[2,1-c:1'2'-e]-phosphepin
4,5,4',5'-Tetrahydro-3H,3'H-4,4'-binaphth-2,2'-diyl-bis-dinaphtho-[2,1-c:1'2'-e]-phosphepin
4,5,4',5'-Tetrahydro-3H,3'H-4,4'-phenylen-1,2-bis-dinaphtho-[2,1-c:1'2'-e]-phosphepin
4,5,4',5'-Tetrahydro-3H,3'H-4,4'-xylylen-1,4-bis-dinaphtho-[2,1-c:1'2'-e]-phosphepin
4,5,4',5'-Tetrahydro-3H,3'H-4,4'-(1,1'-binaphthyl-2,2'-methan-diyl)-bis-dinaphtho-[2,1-c:1'2'-e]-phosphepin
6,7,6',7'-Tetrahydro-5H,5'H-6,6'-butan-1,4-diyl-bis-dibenzo-[c,e]-phosphepin
6,7,6',7'-Tetrahydro-5H,5'H-6,6'-methan-diyl-bis-dibenzo-[c,e]-phosphepin
6,7,6',7'-Tetrahydro-5H,5'H-6,6'-ethan-1,2-diyl-bis-dibenzo-[c,e]-phosphepin
6,7,6',7'-Tetrahydro-5H,5'H-6,6'-propan-1,3-diyl-bis-dibenzo-[c,e]-phosphepin
6,7,6',7'-Tetrahydro-5H,5'H-6,6'-biphen-2,2'-diyl-bis-dibenzo-[c,e]-phosphepin
6,7,6',7'-Tetrahydro-5H,5'H-6,6'-binaphth-2,2'-diyl-bis-dibenzo-[c,e]-phosphepin
6,7,6',7'-Tetrahydro-5H,5'H-6,6'-phenylen-1,2-diyl-bis-dibenzo-[c,e]-phosphepin
6,7,6',7'-Tetrahydro-5H,5'H-6,6'-xylylen-1,4-diyl-bis-dibenzo-[c,e]-phosphepin
6,7,6',7'-Tetrahydro-5H,5'H-6,6'-(1,1'-binaphthyl-2,2'-methan-diyl)-bis-dibenzo-[c,e]-phosphepin

6. Verfahren zur Herstellung von Verbindungen der Formel (I), dadurch gekennzeichnet, daß man eine Verbindung der Formel (II) 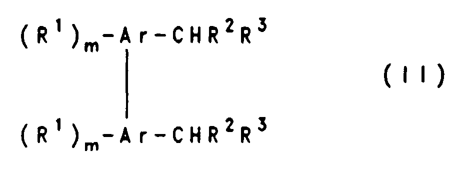 worin Ar, R¹, R², R³ und m die oben definierte Bedeutung besitzen, mit einem protonenentziehenden Mittel zu einem Biaryldianion der Formel (III) 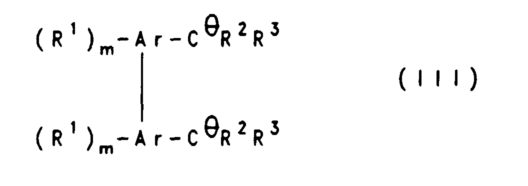 und dieses anschließend mit einer Verbindung der Formel (IV)
X₂P-R⁴-PX₂ (IV)
worin X für Chlor oder Brom steht und R⁴ die oben angeführte Bedeutung besitzt, umsetzt.

7. Verfahren zur Herstellung von Verbindungen der Formel (I), dadurch gekennzeichnet, daß man eine Verbindung der Formel (III) mit einer Verbindung der Formel (V)
X₂P-Z (V)
worin X für Chlor oder Brom und Z für NR⁵₂ oder OAr' steht, wobei R⁵ (C₂-C₁₅)-Alkyl und Ar' einen (C₇-C₂₀)-Alkylarylrest oder einen gegebenenfalls substituierten Phenylrest bedeutet,
zu einer Verbindung der Formel (VI) 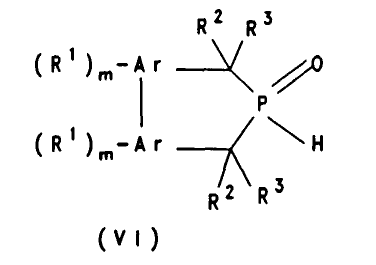 umsetzt, diese mit einer Base deprotoniert und mit einer Verbindung der Formel (VII),
Y-R⁴-Y (VII)
worin Y für eine Abgangsgruppe steht, zu einer Verbindung der Formel (VIII) 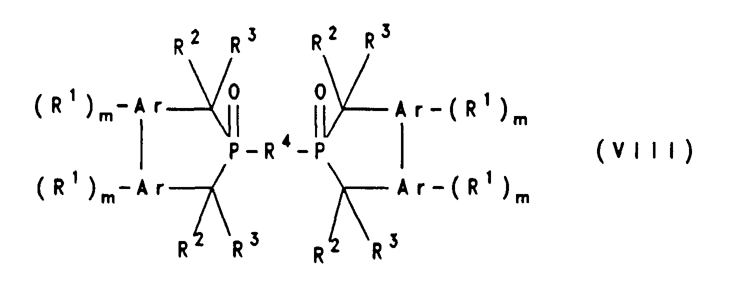 umsetzt und anschließend reduziert.

8. Verfahren nach Anspruch 6, dadurch gekennzeichnet, daß als protonenentziehendes Mittel eine Base R'M, wobei R' für H, (C₁-C₁₀)-Alkyl, (C₁-C₁₀)-Silyl, NR''₂ mit R'' = H, (C₁-C₁₀)-Alkyl und M für Li, Na, K oder Cs steht, insbesondere Natriumhydrid, Kaliumhydrid, n-Butyllithium, Methyllithium, t-Butyllithium, Natriumamid, Lithiumtetramethylpiperitid, Lithiumdiisopropylamid, Lithiumhexamethyldisilazid, bevorzugt n-Butyllithium, t-Butyllithium und Methyllithium eingesetzt wird.

9. Verfahren nach Anspruch 6 oder 8, dadurch gekennzeichnet, daß die Reaktion von (II) nach (III) in Gegenwart eines polar aprotischen oder unpolaren Lösungsmittels, insbesondere Tetrahydrofuran, Diethylether, Dioxan oder eines aliphaischen Kohlenwasserstoffs durchgeführt wird.

10. Verfahren nach mindestens einem der Ansprüche 6, 8 oder 9, dadurch gekennzeichnet, daß die Verbindung (II) und das protonenentziehende Mittel im Verhältnis 1:(2 bis 3), insbesondere 1:(2 bis 2,2) eingesetzt werden.

11. Verfahren nach mindestens einem der Ansprüche 6, 8, 9 oder 10, dadurch gekennzeichnet, daß die Reaktion von (II) nach (III) bei -20 bis 100°C, insbesondere 25 bis 80°C, durchgeführt wird.

12. Verfahren nach mindestens einem der Ansprüche 6, 8 bis 11, dadurch gekennzeichnet, daß die Deprotonierung von (II) zu (III) in Gegenwart eines Kationen-Komplexierungsmittel oder Kronenethers, insbesondere N,N,N',N'-Tetramethylethylendiamin, N,N,N',N'-Tetraethylethylendiamin, 1,5-Diazabicyclo[4.3.0]-non-5-en, Diazabicyclo[2.2.2]-octan, 18-Krone-6 durchgeführt wird.

13. Verfahren nach Anspruch 7, dadurch gekennzeichnet, daß die deprotonierte Verbindung (III) und die Verbindung (V) im Verhältnis 1:(0,9 bis 2), insbesondere 1:(1 bis 1,2) bei -20 bis 100°C umgesetzt werden.

14. Verfahren nach Anspruch 7 oder 13, dadurch gekennzeichnet, daß als Base zur Deprotonierung von (VI) Natriumhydrid, Kaliumhydrid oder eine Alkyllithiumverbindung eingesetzt wird.

15. Verfahren nach mindestens einem der Ansprüche 7, 13 oder 14, dadurch gekennzeichnet, daß Verbindung (VI) und Verbindung (VII) im Verhältnis (1,8 bis 4):1, insbesondere (2 bis 2,4):1 bei 0 bis 100°C umgesetzt werden.

16. Verfahren nach mindestens einem der Ansprüche 7, 13 bis 15, dadurch gekennzeichnet, daß die Reduktion des Phosphanoxids (VIII) in Gegenwart eines inerten Lösungsmittels, insbesondere Toluol, Xylol, Dioxan oder Acetonitril mit einem Hydrid, Organylsilan, Organyldichlorsilans oder Trichlorsilans, insbesondere Lithiumalumniumhydrid, Methyldichlorsilan, Ethyldichlorsilan oder Phenyldichlorsilan bei 20 bis 170°C, insbesondere 40 bis 160°C, bevorzugt 60 bis 150°C, durchgeführt wird.

17. Verbindungen der Formel (VI) worin R¹, R², R³, Ar und m die oben definierte Bedeutung besitzen.

18. Verbindungen der Formel (VIII) worin R¹, R², R³, R⁴, Ar und m die oben definierte Bedeutung besitzen.

## Revendications

1. Bis-phosphépines de la formule générale (I) 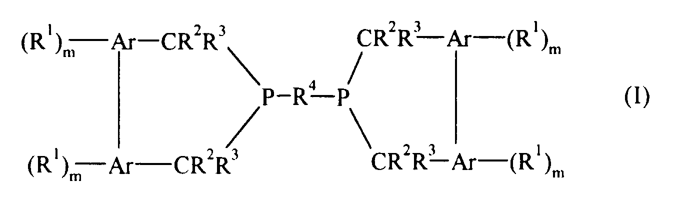 dans laquelle :
Ar-Ar représente un groupe biphényle, 1,1'-binaphtyle, 1-phénylnaphthyle
R¹ représente indépendamment F, un groupe alkyle en C₁-C₈, alcoxy en C₁-C₈,
m est égal à 0, 1, 2, 3, 4
R², R³ représentent indépendamment H, un groupe alkyle en C₁-C₂₀, aryle en C₆-C₂₀, aralkyle en C₇-C₂₀, alkaryle en C₇-C₂₀, cycloalkyle en C₃-C₂₀,
R⁴ représente un groupe alkylène en C₁-C₁₀, la chaîne alkylène pouvant également contenir des atomes d'oxygène et des groupes N-alkyle, un groupe cycloalkylène en C₃-C₁₀, arylènebisalkyle en C₈-C₂₂, arylène en C₆-C₁₀,
le groupe CR²R³ est ici à chaque fois voisin de la liaison Ar-Ar.

2. Composés selon la revendication 1, caractérisés en ce qu'ils possèdent une stéréochimie (R,S), (R,R), (S,S) ou (RS).

3. Composés selon la revendication 1 ou 2, caractérisés en ce que R⁴ représente le groupe méthylène, éthylène, n-propylène, n-butylène, phénylène, xylylène, biphénylène ou naphtylène.

4. Composés selon au moins l'une quelconque des revendications 1 à 3, m étant nul et R² et R³ étant l'hydrogène.

5. 4,5,4',5'-tétrahydro-3H,3'H-4,4'-butan-1,4-diyl-bis-dinaphtho-[2,1-c:1'2'-e]-phosphépine
4,5,4',5'-tétrahydro-3H,3'H-4,4'-méthan-diyl-bis-dinaphtho-[2,1-c:1'2'-e]-phosphépine
4,5,4',5'-tétrahydro-3H,3'H-4,4'-éthan-1,2-diyl-bis-dinaphtho-[2,1-c:1'2'-e]-phosphépine
4,5,4',5'-tétrahydro-3H,3'H-4,4'-propan-1,3-diyl-bis-dinaphtho-[2,1-c:1'2'-e]-phosphépine
4,5,4',5'-tétrahydro-3H,3'H-4,4'-biphén-2,2'-diyl-bis-dinaphtho-[2,1-c:1'2'-e]-phosphépine
4,5,4',5'-tétrahydro-3H,3'H-4,4'-binaphth-2,2-diyl-bis-dinaphtho-[2,1-c:1'2'-e]-phosphépine
4,5,4',5'-tétrahydro-3H,3'H-4,4'-phénylèn-1,2-bis-dinaphtho-[2,1-c:1'2'-e]-phosphépine
4,5,4',5'-tétrahydro-3H,3'H-4,4'-xylylèn-1,4-bis-dinaphtho-[2,1-c:1'2'-e]-phosphépine
4,5,4',5'-tétrahydro-3H,3'H-4,4'-(1,1'-binaphthyl-2,2'-méthan-diyl)-bis-dinaphto-[2,1-c:1'2'-e]-phosphépine
6,7,6',7'-tétrahydro-5H,5'H-6,6'-butan-1,4-diyl-bis-dibenzo-[c,e]-phosphépine
6,7,6',7'-tétrahydro-5H,5'H-6,6'-méthan-diyl-bis-dibenzo-[c,e]-phosphépine
6,7,6',7'-tétrahydro-5H,5'H-6,6'-éthan-1,2-diyl-bis-dibenzo-[c,e]-phosphépine
6,7,6',7'-tétrahydro-5H,5'H-6,6'-propan-1,3-diyl-bis-dibenzo-[c,e]-phosphépine
6,7,6',7'-tétrahydro-5H,5'H-6,6'-biphén-2,2'-diyl-bis-dibenzo-[c,e]-phosphépine
6,7,6',7'-tétrahydro-5H,5'H-6,6'-binaphth-2,2'-diyl-bis-dibenzo-[c,e]-phosphépine
6,7,6',7'-tétrahydro-5H,5'H-6,6'-phénylén-1,2-diyl-bis-dibenzo-[c,e]-phosphépine
6,7,6',7'-tétrahydro-5H,5'H-6,6'-xylylèn-1,4-diyl-bis-dibenzo-[c,e]-phosphépine
6,7,6',7'-tétrahydro-5H,5'H-6,6'-(1,1'-binaphthyl-2,2'-méthan-diyl)-bis-dibenzo-[c,e]-phosphépine.

6. Procédé pour la préparation de composés de la formule (I), caractérisé en ce que l'on fait réagir un composé de la formule (II) 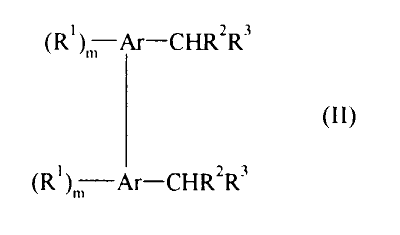 dans laquelle Ar, R¹, R², R³ et m ont la signification définie ci-dessus avec un agent prélevant des protons pour produire un dianion biaryle de la formule (III). 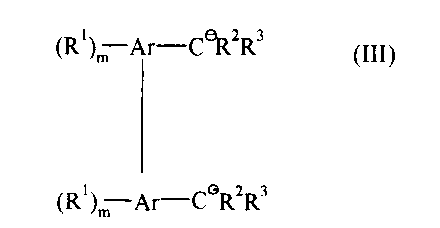 et on fait ensuite réagir celui-ci avec un composé de la formule (IV) 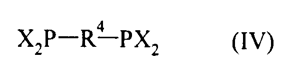 dans laquelle X représente le chlore ou le brome et R⁴ a la signification donnée ci-dessus.

7. Procédé pour la préparation de composés de la formule (I), caractérisé en ce que l'on fait réagir un composé de la formule (III) avec un composé de la formule (V)
X₂P ― Z (V)
dans laquelle X représente le chlore ou le brome et Z représente NR⁵₂ ou OAr', R⁵ représentant un groupe alkyle en C₂-C₁₅ et Ar' un reste alkylaryle en C₇-C₂₀ ou un reste phényle éventuellement substitué,
pour produire un composé de la formule (VI) 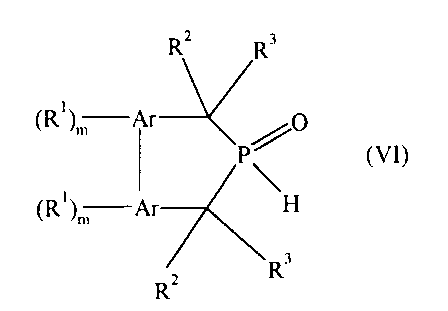 on déprotone celui-ci avec une base et on le fait réagir avec un composé de la formule (VII), 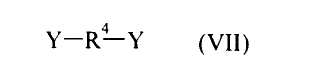 dans laquelle Y représente un groupe de rejet, pour produire un composé de la formule (VIII) 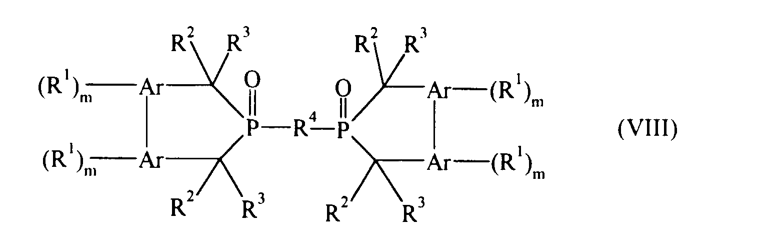 et on le réduit ensuite.

8. Procédé selon la revendication 6, caractérisé en ce que l'on utilise comme agent prélevant des protons une base R'M, R' représentant H, un groupe alkyle en C₁-C₁₀, silyle en C₁-C₁₀, NR"₂ avec R" = H, un groupe alkyle en C₁-C₁₀ et M représentant Li, Na, K ou Cs, en particulier l'hydrure de sodium, l'hydrure de potassium, le n-butyllithium, le méthyllithium, le t-butyllithium, le sodiumamide, le lithiumtétraméthylpipéritide, le lithiumdiisopropylamide, le lithiumhexaméthyldisilazide, de préférence le n-butyllithium, le t-butyllithium et le méthyllithium.

9. Procédé selon la revendication 6 ou 8, caractérisé en ce que l'on réalise la réaction de (II) en (III) en présence d'un solvant polaire aprotique ou non polaire, en particulier le tétrahydrofurane, le diéthyléther, le dioxane ou un hydrocarbure aliphatique.

10. Procédé selon au moins l'une quelconque des revendications 6, 8 ou 9, caractérisé en ce que l'on utilise le composé (II) et l'agent prélevant des protons avec un rapport de 1:(2 à 3), en particulier de 1:(2 à 2,2).

11. Procédé selon au moins l'une quelconque des revendications 6, 8, 9 ou 10, caractérisé en ce que l'on réalise la réaction de (II) en (III) à de -20 à 100°C, en particulier de 25 à 80°C.

12. Procédé selon au moins l'une quelconque des revendications 6, 8 à 11, caractérisé en ce que l'on réalise la déprotonation de (II) en (III) en présence d'un agent complexant de cations ou d'un éther couronne, en particulier la N, N, N', N'-tétraméthyléthylènediamine, la N,N,N',N'-tétraéthyléthylènediamine, le 1,5-diazabicyclo[4.3.0]-non-5-éne, le diazabicyclo[2.2.2]octane, l'éther 18-couronne-6.

13. Procédé selon la revendication 7, caractérisé en ce que le composé déprotoné (III) et le composé (V) réagissent avec un rapport de 1:(0,9 à 2), en particulier de 1:(1 à 1,2) à de -20 à 100°C.

14. Procédé selon la revendication 7 ou 13, caractérisé en ce que l'on utilise comme base pour la déprotonation de (VI) de l'hydrure de sodium, de l'hydrure de potassium ou un composé d'alkyllithium.

15. Procédé selon au moins l'une quelconque des revendications 7, 13 ou 14, caractérisé en ce que l'on fait réagir le composé (VI) et le composé (VII) dans un rapport de (1,8 à 4):1, en particulier de (2 à 2,4):1 à de 0 à 100°C.

16. Procédé selon au moins l'une quelconque des revendications 7, 13 à 15, caractérisé en ce que l'on réalise la réduction de l'oxyde de phosphane (VIII) en présence d'un solvant inerte, en particulier le toluène, le xylène, le dioxane ou l'acétonitrile avec un hydrure, un organylsilane, un organyldichlorosilane ou le trichlorosilane, en particulier l'hydrure de lithiumaluminium, le méthyldichlorosilane, l'éthyldichlorosilane ou le phényldichlorosilane à de 20 à 170°C, en particulier à de 40 à 160°C, de préférence à de 60 à 150°C.

17. Composés de la formule (VI) dans laquelle R¹, R², R³, Ar et m ont la signification définie ci-dessus.

18. Composés de la formule (VIII) dans laquelle R¹, R², R³, R⁴, Ar et m ont la signification définie ci-dessus.

## Claims

1. A bis-phosphepine of the formula (I): 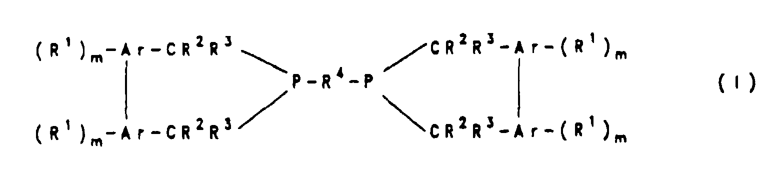 where:
Ar-Ar is biphenyl, 1,1'-binaphthyl or 1-phenylnaphthyl,
R¹ independently of one another are F, (C₁-C₈)-alkyl or (C₁-C₈)-alkoxy,
m is 0, 1, 2, 3 or 4,
R² and R³ independently of one another are H, (C₁-C₂₀)-alkyl, (C₆-C₂₀) -aryl, (C₇-C₂₀)-aralkyl, (C₇-C₂₀)-alkaryl or (C₃-C₂₀) -cycloalkyl and
R⁴ is (C₁-C₁₀)-alkylene, it also being possible for the alkylene chain to contain oxygen atoms and N-alkyl groups, (C₃-C₁₀) -cycloalkylene, (C₈-C₂₂)-arylenebisalkyl or (C₆-C₁₀)-arylene,
the group CR²R³ always being adjacent to the Ar- Ar bond.

2. A compound as claimed in claim 1 which has (R,S), (R,R), (S,S) or (RS) stereochemistry.

3. A compound as claimed in claim 1 or 2 wherein R⁴ is methylene, ethylene, n-propylene, n-butylene, phenylene, xylylene, biphenylene or naphthylene.

4. A compound as claimed in at least one of claims 1 to 3 wherein m is equal to zero and R² and R³ are hydrogen.

5. 4,5,4',5'-Tetrahydro-3H,3'H-4,4'-butane-1,4-diyl-bis-dinaphtho[2,1-c:1',2'-e]phosphepine
4,5,4',5'-tetrahydro-3H,3'H-4,4'-methanediyl-bis-dinaphtho[2,1-c:1',2'-e]phosphepine
4,5,4',5'-tetrahydro-3H,3'H-4,4'-ethane-1,2-diyl-bis-dinaphtho[2,1-c:1',2'-e]phosphepine
4,5,4',5'-tetrahydro-3H,3'H-4,4'-propane-1,3-diyl-bis-dinaphtho[2,1-c:1',2'-e]phosphepine
4,5,4',5'-tetrahydro-3H,3'H-4,4'-biphen-2,2'-diyl-bis-dinaphtho[2,1-c:1',2'-e]phosphepine
4,5,4',5'-tetrahydro-3H,3'H-4,4'-binaphth-2,2'-diyl-bis-dinaphtho[2,1-c:1',2'-e]phosphepine
4,5,4',5'-tetrahydro-3H,3'H-4,4'-phenylene-1,2-bis-dinaphtho[2,1-c:1',2'-e]phosphepine
4,5,4',5'-tetrahydro-3H,3'H-4,4'-xylylene-1,4-bis-dinaphtho[2,1-c:1',2'-e]phosphepine
4,5,4',5'-tetrahydro-3H,3'H-4,4'-(1,1'-binaphthyl-2,2'-methanediyl)-bis-dinaphtho[2,1-c:1',2'-e]phosphepine
6,7,6',7'-tetrahydro-5H,5'H-6,6'-butane-1,4-diyl-bis-dibenzo[c,e]phosphepine
6,7,6',7'-tetrahydro-5H,5'H-6,6'-methanediyl-bis-dibenzo[c,e]phosphepine
6,7,6',7'-tetrahydro-5H,5'H-6,6'-ethane-1,2-diyl-bis-dibenzo[c,e]phosphepine
6,7,6',7'-tetrahydro-5H,5'H-6,6'-propane-1,3-diyl-bis-dibenzo[c,e]phosphepine
6,7,6',7'-tetrahydro-5H,5'H-6,6'-biphen-2,2'-diyl-bis-dibenzo[c,e]phosphepine
6,7,6',7'-tetrahydro-5H,5'H-6,6'-binaphth-2,2'-diyl-bis-dibenzo[c,e]phosphepine
6,7,6',7'-tetrahydro-5H,5'H-6,6'-phenylene-1,2-diyl-bis-dibenzo[c,e]phosphepine
6,7,6',7'-tetrahydro-5H,5'H-6,6'-xylylene-1,4-diyl-bis-dibenzo[c,e]phosphepine
6,7,6',7'-tetrahydro-5H,5'H-6,6'-(1,1'-binaphthyl-2,2'-methanediyl)-bis-dibenzo[c,e]phosphepine

6. A process for the preparation of compounds of the formula (I), which comprises reacting a compound of the formula (II): 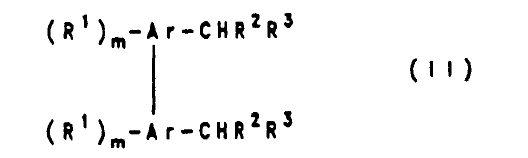 where Ar, R¹, R², R³ and m are as defined above, with a proton-abstracting agent to give a biaryl dianion of the formula (III): 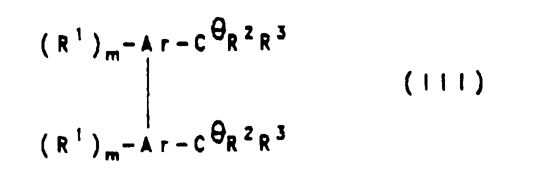 and then reacting the latter with a compound of the formula (IV):
X₂P-R⁴-PX₂ (IV)
where X is chlorine or bromine and R⁴ is defined as indicated above.

7. A process for the preparation of compounds of the formula (I), which comprises reacting a compound of the formula (III) with a compound of the formula (V) :
X₂P-Z (V)
where X is chlorine or bromine and Z is NR⁵₂ or OAr', R⁵ being (C₂-C₁₅)-alkyl and Ar' being a (C₇-C₂₀)-alkylaryl radical or a substituted or unsubstituted phenyl radical,
to give a compound of the formula (VI): 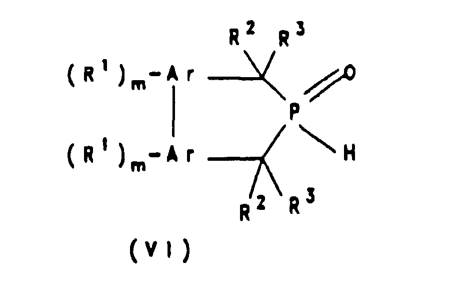 deprotonating the latter with a base and reacting it with a compound of the formula (VII):
Y-R⁴-Y (VII)
where Y is a leaving group, to give a compound of the formula (VIII): 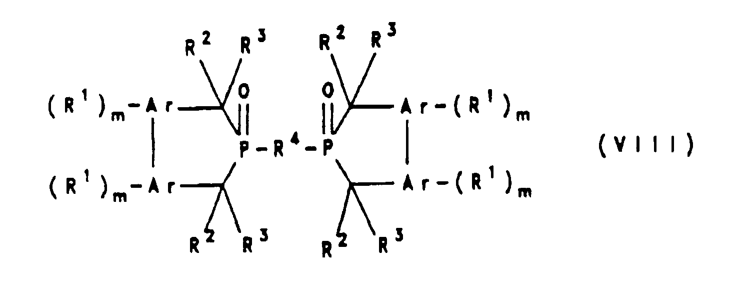 and then reducing the latter.

8. The process as claimed in claim 6, wherein the proton-abstracting agent used is a base R'M, wherein R' is H, (C₁-C₁₀)-alkyl, (C₁-C₁₀)-silyl or NR"₂, where R" = H or (C₁-C₁₀)-alkyl, and M is Li, Na, K or Cs, especially sodium hydride, potassium hydride, n-butyllithium, methyllithium, t-butyllithium, sodium amide, lithium tetramethylpiperidide, lithium diisopropylamide or lithium hexamethyldisilazide, preferably n-butyllithium, t-butyllithium or methyllithium.

9. The process as claimed in claim 6 or 8, wherein the reaction of (II) to give (III) is carried out in the presence of a polar aprotic or non-polar solvent, especially tetrahydrofuran, diethyl ether, dioxane or an aliphatic hydrocarbon.

10. The process as claimed in at least one of claims 6, 8 or 9, wherein the compound (II) and the proton-abstracting agent are used in a ratio of 1:(2 to 3), especially 1:(2 to 2.2).

11. The process as claimed in at least one of claims 6, 8, 9 or 10, wherein the reaction of (II) to give (III) is carried out at -20 to 100°C, especially 25 to 80°C.

12. The process as claimed in at least one of claims 6 and 8 to 11, wherein the deprotonation of (II) to give (III) is carried out in the presence of a cation-complexing agent or crown ether, especially N,N,N',N'-tetramethylethylenediamine, N,N,N',N'-tetraethylethylenediamine, 1,5-diazabicyclo[4.3.0]-non-5-ene, diazabicyclo[2.2.2]octane or 18-crown-6.

13. The process as claimed in claim 7, wherein the deprotonated compound (III) and the compound (V) are reacted in a ratio of 1:(0.9 to 2), especially 1:(1 to 1.2), at -20 to 100°C.

14. The process as claimed in claim 7 or 13, wherein the base used for the deprotonation of (VI) is sodium hydride, potassium hydride or an alkyllithium compound.

15. The process as claimed in at least one of claims 7, 13 or 14, wherein the compound (VI) and the compound (VII) are reacted in a ratio of (1.8 to 4):1, especially (2 to 2.4):1, at 0 to 100°C.

16. The process as claimed in at least one of claims 7 and 13 to 15, wherein the reduction of the phosphine oxide (VIII) is carried out in the presence of an inert solvent, especially toluene, xylene, dioxane or acetonitrile, with a hydride, organosilane, organodichlorosilane or trichlorosilane, especially lithium aluminum hydride, methyldichlorosilane, ethyldichlorosilane or phenyldichlorosilane, at 20 to 170°C, especially 40 to 160°C and preferably 60 to 150°C.

17. A compound of the formula (VI) where R¹, R², R³, Ar and m are as defined above.

18. A compound of the formula (VIII) where R¹, R², R³, R⁴, Ar and m are as defined above.
